# EUROPEAN PATENT APPLICATION

(11) **EP 4 245 974 A1**
(43) Date of publication of application: **20.09.2023**
(21) Application number: 23159023.3
(22) Date of filing: 28.02.2023
(51) Int. Cl.: F02B 19/10, F02M 21/02, F02M 35/10

(54) **ENGINE**

(30) Priority: 17.03.2022 JP 2022042200
(71) Applicant: Yanmar Holdings Co., Ltd., Osaka-shi, Osaka (JP)
(72) Inventor: KUMADA, Taishi, Osaka (JP); IWATA, Kazuki, Osaka (JP); HIRASOZU, Kazuyuki, Osaka (JP); KUWAZURU, Sadao, Osaka (JP); TATEISHI, Takahisa, Osaka (JP); ODA, Yusuke, Osaka (JP)
(74) Representative: Novagraaf International SA

(57) **Abstract**

[Problem] To provide an engine capable of more quickly decreasing an auxiliary chamber gas pressure and ensuring a favorable load responsiveness.

[Solution] A gas engine 1 is an engine including, as combustion chambers of each cylinder 11, an auxiliary chamber 21 that ignites fuel gas to generate flame and a main chamber 20 that combusts the mixture of fuel gas and air using the flame generated in the auxiliary chamber 21, and includes an auxiliary chamber main pipe 39 that supplies the fuel gas to the auxiliary chamber 21, an air supply passage 32 in which the air to be supplied to the main chamber 20 flows, and a connection pipe 41 communicating from the auxiliary chamber main pipe 39 to the air supply passage 32.

## Description

### TECHNICAL FIELD

The present invention relates to an engine including a main chamber and an auxiliary chamber as combustion chambers.

### BACKGROUND ART

Conventionally, engines include, e.g., an auxiliary chamber-type gas engine including, as combustion chambers, an auxiliary chamber that ignites fuel gas to generate flame and a main chamber that combusts the mixture of fuel gas and air using the flame generated in the auxiliary chamber.

Further, gas engines include, e.g., a gas engine that mixes fuel gas introduced through a fuel flow control valve with air flowing in an air supply pipe, adjusts the flow rate of the air-fuel mixture by a throttle valve, and supplies the air-fuel mixture to a combustion chamber, as disclosed in Patent Literature 1. An integrated control method for this gas engine includes a step of setting the fuel gas flow rate of the fuel flow rate control valve based on a deviation between a detected engine state and an engine state which is a target value and a step of performing a feedback control of setting a target opening degree for the throttle valve. With this configuration, a load responsiveness is improved while air-fuel ratio control is maintained with a high accuracy.

### PRIOR ART DOCUMENT

### PATENT DOCUMENT

Patent Document 1: JP-A-2009-57870

### SUMMARY OF INVENTION

### TECHNICAL PROBLEM

The air-fuel ratio control as disclosed in Patent Literature 1 is sometimes applied to the auxiliary chamber-type gas engine to control the air-fuel ratio in the auxiliary chamber. For example, in a configuration in which a check valve that supplies fuel gas to an auxiliary chamber is provided, the amount of fuel gas flowing into the auxiliary chamber from the check valve is controlled to a stoichiometric state in such a manner that a gas pressure in an auxiliary chamber main pipe on the upstream side of the check valve is controlled higher than a pressure (i.e., a pressure in a combustion chamber) in an intake manifold. A target gas pressure in the auxiliary chamber main pipe is an adaptive value determined depending on a load factor, and PID control is performed using a proportional valve on the upstream side of the auxiliary chamber main pipe such that the gas pressure in the auxiliary chamber main pipe follows the target gas pressure.

When the load is applied to the engine, a fuel gas supply to the main chamber rapidly increases, so that the air-fuel ratio in the auxiliary chamber is also enriched. When the load is applied, the gas pressure (auxiliary chamber gas pressure) in the auxiliary chamber is controlled to be rapidly decreased such that the air-fuel ratio in the auxiliary chamber does not deviate from a combustible range. Thus, the target gas pressure decreases, and the proportional valve is displaced to a closed state. At this point, in the prior art, in order to decrease the gas pressure in the auxiliary chamber main pipe in a state in which the proportional valve is displaced to the closed state, it is necessary to cause the gas in the auxiliary chamber main pipe to flow into the auxiliary chamber through the check valve, and for this reason, the auxiliary chamber gas pressure cannot be rapidly decreased. In addition, due to the fact that it takes time for the auxiliary chamber gas pressure to be controlled by the gas flow rate of the check valve and sufficiently decrease, after the proportional valve has been fully closed, a response delay occurs until the proportional valve is opened when it is desired to increase the auxiliary chamber gas pressure. As a result of the above-described response delay, the air-fuel ratio in the auxiliary chamber cannot be properly controlled and misfire occurs, leading to a failure to apply the load.

The present invention is intended to provide an engine capable of more quickly decreasing an auxiliary chamber gas pressure and ensuring a favorable load responsiveness.

### SOLUTION TO PROBLEM

In order to achieve the above-described object, the engine of the present invention is an engine including, as a combustion chamber, an auxiliary chamber that ignites fuel gas to generate flame and a main chamber that combusts a mixture of fuel gas and air using the flame generated in the auxiliary chamber, the engine including an auxiliary chamber main pipe that supplies the fuel gas to the auxiliary chamber, an air supply passage in which the air to be supplied to the main chamber flows, and a connection pipe communicating from the auxiliary chamber main pipe to the air supply passage.

### ADVANTAGEOUS EFFECTS OF INVENTION

According to the present invention, the engine is provided, which is capable of more quickly decreasing the auxiliary chamber gas pressure and ensuring the favorable load responsiveness.

### BRIEF DESCRIPTION OF DRAWINGS

Fig. 1 is a schematic view showing a gas engine according to an embodiment of the present invention;
Fig. 2 is a schematic view showing each cylinder of the gas engine according to the embodiment of the present invention; and
Fig. 3 is a graph showing an operation example of the gas engine according to the embodiment of the present invention.

### DESCRIPTION OF EMBODIMENTS

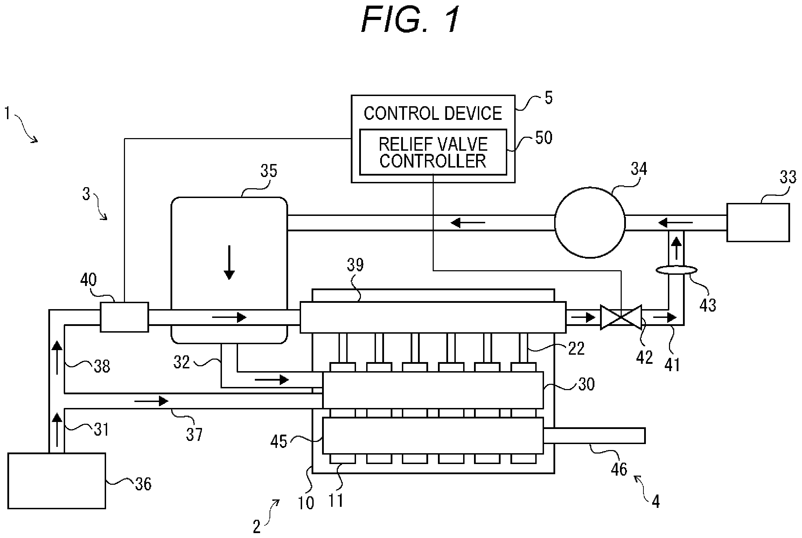

A gas engine 1 according to an embodiment of an engine of the present invention will be described with reference to the drawings. As shown in Fig. 1, the gas engine 1 includes an engine body 2, an intake mechanism 3, an exhaust mechanism 4, and a control device 5.

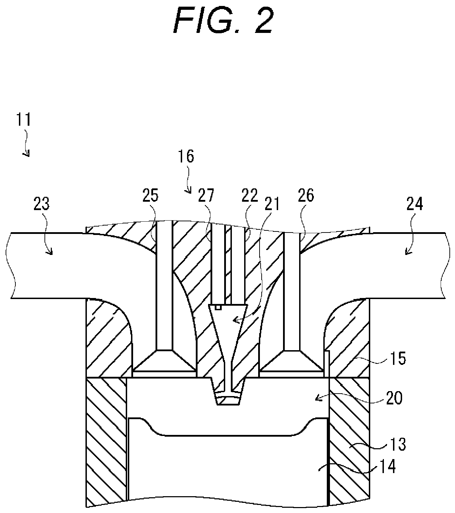

First, the engine body 2 will be described. The engine body 2 includes a plurality of cylinders 11 in a cylinder block 10. As shown in Fig. 2, each cylinder 11 includes a cylinder body 13, a piston 14, a cylinder head 15, and an ignition device 16. Note that in the present specification, a supply of an air-fuel mixture to each cylinder 11 will be referred to as "intake," and a supply of air as a source of the air-fuel mixture will be referred to as "air supply."

The cylinder body 13 is formed, for example, in a tubular shape in the cylinder block 10, and the piston 14 is slidably housed in the cylinder body 13. The cylinder head 15 is attached to the upper side of the cylinder body 13, and the cylinder body 13 and the cylinder head 15 form a combustion chamber inside.

In particular, a main chamber 20 which is a main combustion chamber is formed between the piston 14 and the cylinder head 15 in the cylinder body 13, and an auxiliary chamber 21 which is an auxiliary combustion chamber communicating with the main chamber 20 of the cylinder body 13 is formed in a lower portion of the cylinder head 15. In the cylinder head 15, a check valve 22 is provided above the auxiliary chamber 21. The check valve 22 is connected to an auxiliary chamber main pipe 39 (see Fig. 1) of the intake mechanism 3, and fuel gas is introduced into the auxiliary chamber 21 through the auxiliary chamber main pipe 39 and the check valve 22. The check valve 22 is configured to open or close according to a difference between a gas pressure (i.e., the pressure of the air-fuel mixture in the main chamber 20) in the auxiliary chamber 21 and a gas pressure in the auxiliary chamber main pipe 39.

For example, in a case where the gas pressure (the pressure of the air-fuel mixture in the main chamber 20) in the auxiliary chamber 21 is high and the difference from the gas pressure in the auxiliary chamber main pipe 39 is less than a predetermined check threshold, the check valve 22 is displaced to a closed state and cuts off a supply of fuel gas to the auxiliary chamber 21. On the other hand, in a case where the gas pressure (the pressure of the air-fuel mixture in the main chamber 20) in the auxiliary chamber 21 is low and the difference from the gas pressure in the auxiliary chamber main pipe 39 is equal to or greater than the predetermined check threshold, the check valve 22 is displaced to an open state and supplies fuel gas to the auxiliary chamber 21. Note that the pressure difference between the auxiliary chamber 21 and the auxiliary chamber main pipe 39 can be adjusted in such a manner that an auxiliary chamber proportional valve 40 (see Fig. 1) adjusts the gas pressure in the auxiliary chamber main pipe 39 to a target gas pressure, and therefore, the amount of fuel gas supplied to the auxiliary chamber 21 can be adjusted in such a manner that the opening degree of the check valve 22 is adjusted. Specifically, the air-fuel ratio of the air-fuel mixture generated in the auxiliary chamber 21 is controlled to a stoichiometric state using fuel gas having flowed into the auxiliary chamber 21 from the check valve 22.

The cylinder head 15 has an intake port 23 and an exhaust port 24 communicating with the main chamber 20 of the cylinder body 13, and includes an intake valve 25 and an exhaust valve 26 that each open or close the intake port 23 and the exhaust port 24 to or from the main chamber 20. The intake port 23 is connected to the intake mechanism 3 to introduce the mixture of fuel gas and air from the intake mechanism 3 into the main chamber 20, and the exhaust port 24 is connected to the exhaust mechanism 4 to discharge exhaust gas generated in the main chamber 20 to the exhaust mechanism 4. By opening the intake valve 25, the mixture of fuel gas and air can be taken into the main chamber 20 through the intake port 23. On the other hand, by opening the exhaust valve 26, the exhaust gas generated in the main chamber 20 can be discharged through the exhaust port 24.

The ignition device 16 is provided above the auxiliary chamber 21 in the cylinder head 15, and includes an ignition plug 27 exposed to the auxiliary chamber 21. The ignition device 16 is controlled by the control device 5, and by the ignition plug 27, ignites the fuel gas introduced into the auxiliary chamber 21 through the auxiliary chamber main pipe 39 and the check valve 22 to generate flame in the auxiliary chamber 21. The ignition device 16 ejects the flame generated in the auxiliary chamber 21 into the main chamber 20. In the main chamber 20, the mixture of fuel gas and air taken in through the intake port 23 is combusted using the flame generated in the auxiliary chamber 21.

Next, the intake mechanism 3 will be described. As shown in Fig. 1, the intake mechanism 3 includes an intake manifold 30, a fuel gas passage 31, and an air supply passage 32. The intake manifold 30 supplies the mixture of fuel gas and air to the plurality of cylinders 11. The intake manifold 30 is branched corresponding to each of the plurality of cylinders 11 and is connected to each intake port 23 of the plurality of cylinders 11. In other words, each branched flow path (not shown) of the intake manifold 30 is connected to a corresponding one of the intake ports 23.

The air supply passage 32 circulates air, which is a source of an air-fuel mixture supplied to the plurality of cylinders 11, to the intake manifold 30. The air supply passage 32 is connected to the intake manifold 30 at a downstream end in an air supply direction, and supplies air from the intake manifold 30 to each branched flow path (not shown) branched corresponding to the intake port 23. The air supply passage 32 is provided, in this order from the upstream side in the air supply direction, with an air filter 33 that purifies and introduces fresh air, a supercharger 34 that compresses the air introduced from the air filter 33 and delivers the air to the downstream side, and an intercooler 35 that cools the air compressed by the supercharger 34. Further, the air supply passage 32 is provided with a throttle valve (not shown) capable of adjusting an air supply amount. Opening/closing and the opening degree of the throttle valve are controlled by the control device 5, and the throttle valve supplies air to each intake port 23.

The fuel gas passage 31 circulates fuel gas, which is a source of an air-fuel mixture supplied to the plurality of cylinders 11, to the intake manifold 30. Although the fuel gas passage 31 is shown to be connected to the intake manifold 30 in Fig. 1, the fuel gas passage 31 is connected to each gas injector (not shown) provided in each branched flow path branched from the intake manifold 30 to the intake port 23, and the fuel gas flowing in the fuel gas passage 31 is supplied to each intake port 23 by the gas injector. Each gas injector is controlled by the control device 5 to eject the fuel gas into each intake port 23.

The fuel gas passage 31 is provided with a gas compressor 36 on the upstream side in a fuel gas supply direction, and is further branched into a main chamber passage 37 and an auxiliary chamber passage 38 on the downstream side of the gas compressor 36 in the fuel gas supply direction. The main chamber passage 37 is branched corresponding to each of the plurality of cylinders 11, is connected to each gas injector of the intake ports 23 on the downstream side in the fuel gas supply direction, and supplies the fuel gas to each gas injector.

The auxiliary chamber passage 38 is connected to the auxiliary chamber main pipe 39 on the downstream side in the fuel gas supply direction, and the auxiliary chamber main pipe 39 is further connected to the check valve 22 provided in each cylinder head 15 of the plurality of cylinders 11. The auxiliary chamber passage 38 is provided with the auxiliary chamber proportional valve 40 on the upstream side in the fuel gas supply direction.

The auxiliary chamber proportional valve 40 includes an electromagnetic valve and the like, and is controlled by the control device 5 to displace to an open state or a closed state. The auxiliary chamber passage 38 supplies the fuel gas to the auxiliary chamber main pipe 39 by opening the auxiliary chamber proportional valve 40, and on the other hand, cuts off a supply of the fuel gas to the auxiliary chamber main pipe 39 by closing the auxiliary chamber proportional valve 40. Note that the amount of fuel gas supplied to the auxiliary chamber main pipe 39 can be adjusted by adjusting the opening degree of the auxiliary chamber proportional valve 40 and the auxiliary chamber proportional valve 40 can adjust the gas pressure in the auxiliary chamber main pipe 39 to the target gas pressure.

Particularly in the present embodiment, a connection pipe 41 communicating with the air supply passage 32 is connected to the auxiliary chamber main pipe 39 of the auxiliary chamber passage 38. The connection pipe 41 is configured to release the fuel gas in the auxiliary chamber main pipe 39 to the air supply passage 32 to decrease the gas pressure in the auxiliary chamber main pipe 39. The connection pipe 41 is preferably connected to the air supply passage 32 on the upstream side of the supercharger 34 in the air supply direction in the air supply passage 32. The connection pipe 41 is provided with a relief valve 42 capable of adjusting the flow rate of fuel gas from the auxiliary chamber main pipe 39 to the air supply passage 32 and an orifice 43 that suppresses the flow rate of fuel gas to the air supply passage 32 to a predetermined amount.

The relief valve 42 includes an electromagnetic proportional valve and the like, and is controlled by the control device 5 to displace to an open state or a closed state. The connection pipe 41 releases the fuel gas in the auxiliary chamber main pipe 39 to the air supply passage 32 by opening the relief valve 42, and blocks the fuel gas from releasing from the auxiliary chamber main pipe 39 through the connection pipe 41 by closing the relief valve 42. Note that the flow rate of fuel gas releasing from the auxiliary chamber main pipe 39 through the connection pipe 41 can be adjusted in such a manner that the opening degree of the relief valve 42 is adjusted.

Next, the exhaust mechanism 4 will be described. The exhaust mechanism 4 includes an exhaust manifold 45 and an exhaust passage 46. The exhaust manifold 45 discharges exhaust gas generated in the plurality of cylinders 11. The exhaust manifold 45 is branched corresponding to each of the plurality of cylinders 11 and is connected to each exhaust port 24 of the plurality of cylinders 11. In other words, each branched flow path (not shown) of the exhaust manifold 45 is connected to a corresponding one of the exhaust ports 24. The exhaust passage 46 discharges the exhaust gas generated in the plurality of cylinders 11 and discharged from the exhaust manifold 45.

Next, the control device 5 will be described. The control device 5 is a computer such as an engine control unit (ECU) that controls operation of the gas engine 1, includes a CPU, a ROM, a RAM and the like, and is configured to control each unit of the gas engine 1. The control device 5 may store various programs for controlling the gas engine 1, and control the gas engine 1 by reading and executing the programs.

In addition, the gas engine 1 is provided with various sensors such as a rotation number sensor that detects the rotation number (rotation speed) of the gas engine 1, a main chamber gas pressure sensor that detects the gas pressure in the main chamber passage 37, and an auxiliary chamber gas pressure sensor that detects the gas pressure in the auxiliary chamber main pipe 39. The control device 5 is connected to these various sensors, and monitors each unit of the gas engine 1 by acquiring the rotation number of the gas engine 1 detected by the rotation number sensor, the gas pressure detected in the main chamber passage 37 by the main chamber gas pressure sensor, and the gas pressure detected in the auxiliary chamber main pipe 39 by the auxiliary chamber gas pressure sensor.

The control device 5 has a function of controlling the rotation number (rotation speed) of the gas engine 1 and the air-fuel ratio in each main chamber 20 of the plurality of cylinders 11, and for example, controls the air-fuel ratio of each main chamber 20 such that the rotation number of the gas engine 1 reaches a target rotation number. For example, the control device 5 controls the amount of fuel gas supplied from the gas injector corresponding to each intake port 23 of the plurality of cylinders 11 based on the rotation number and load factor of the gas engine 1, and controls the rotation number of the gas engine 1 to the target rotation number. The control device 5 controls the throttle valve of the air supply passage 32, the gas injector corresponding to each intake port 23 and the like to control the air-fuel ratio of each main chamber 20 to a lean state, and controls the ignition plug 27 of each ignition device 16 of the plurality of cylinders 11 to control a timing of igniting the air-fuel mixture in each main chamber 20.

For the intake mechanism 3, the control device 5 sets the target gas pressure in the auxiliary chamber main pipe 39 based on the gas pressure of each intake port 23 of the intake manifold 30 and the load factor of the gas engine 1, and performs PID control for opening/closing of the auxiliary chamber proportional valve 40 such that the pressure of fuel gas in the auxiliary chamber main pipe 39 reaches the target gas pressure. The control device 5 controls the air-fuel ratio of the air-fuel mixture generated by the fuel gas having flowed into the auxiliary chamber 21 from the check valve 22 to the stoichiometric state by setting the target gas pressure in the auxiliary chamber main pipe 39 higher than the gas pressure (i.e., the pressure of air-fuel mixture in the main chamber 20) in the auxiliary chamber 21.

Particularly in the present embodiment, the control device 5 may operate as a relief valve controller 50 that controls the relief valve 42, and the relief valve controller 50 may include, e.g., a program executed by the control device 5.

In a case where a predetermined condition (e.g., a condition based on an operation state of the gas engine 1 and a predetermined elapsed time) is satisfied, the relief valve controller 50 of the control device 5 switches the relief valve 42 to the open state to cause the auxiliary chamber main pipe 39 and the air supply passage 32 to communicate with each other through the connection pipe 41. Normally, the relief valve controller 50 maintains the relief valve 42 in the closed state, switches the relief valve 42 to the open state when the condition based on the operation state of the gas engine 1 and the predetermined elapsed time is satisfied, and switches the relief valve 42 to the closed state again when a condition based on the operation state of the gas engine 1 and a predetermined closing time is satisfied. The relief valve controller 50 preferably includes a primary filter that gradually displaces the relief valve 42 in the closed state to the open state and gradually displaces the relief valve 42 in the open state to the closed state.

Specifically, the relief valve controller 50 starts displacement of the relief valve 42 to the open state after a lapse of a predetermined time (e.g., five seconds) since the rotation number of the gas engine 1 reached a predetermined rated rotation number after the start of the gas engine 1. That is, the predetermined condition for switching the relief valve 42 to the open state is set based on the operation state of the gas engine 1 and the predetermined elapsed time.

In addition, when the load is applied to the gas engine 1 after the gas engine 1 has been started and the relief valve 42 has been brought into the open state, the relief valve controller 50 starts displacement of the relief valve 42 to the closed state after a lapse of a predetermined first closing time (e.g., five seconds) since the load factor of the gas engine 1 reached a predetermined load threshold (e.g., 30%) or more and after a lapse of a predetermined second closing time (e.g., five seconds) since the rotation number of the gas engine 1 reached a predetermined rotation number threshold (e.g., 1480 min⁻¹) or more.

Note that the predetermined elapsed time and the predetermined closing time such as the first closing time or the second closing time may be preset values, be arbitrarily set by a user, or be changed according to the operation state of the gas engine 1.

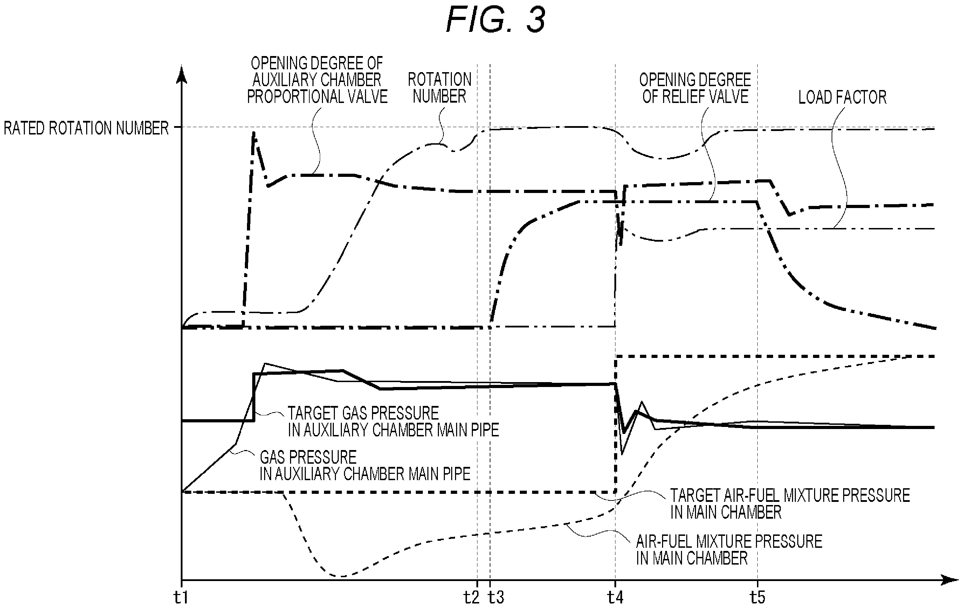

Next, an operation example of the gas engine 1 will be described with reference to Fig. 3. In Fig. 3, the rotation number of the gas engine 1 is indicated by a thin chain line, and the load factor of the gas engine 1 is indicated by a thin chain double-dashed line. Moreover, in Fig. 3, the target air-fuel mixture pressure in the main chamber 20 is indicated by a thick broken line, and the air-fuel mixture pressure in the main chamber 20 is indicated by a thin broken line. Further, in Fig. 3, the target gas pressure in the auxiliary chamber main pipe 39 is indicated by a thick solid line, and the gas pressure in the auxiliary chamber main pipe 39 is indicated by a thin solid line. In addition, in Fig. 3, the opening degree of the auxiliary chamber proportional valve 40 is indicated by a thick chain line, and the opening degree of the relief valve 42 is indicated by a thick chain double-dashed line.

First, when the gas engine 1 is started at a time point 11, the control device 5 controls each unit such that the rotation number of the gas engine 1 increases. The relief valve controller 50 starts displacement of the relief valve 42 to the open state at a time point t3 after a lapse of the predetermined time (e.g., five seconds) since the rotation number of the gas engine 1 reached the predetermined rated rotation number at the time point t2.

Thereafter, when the load is applied to the gas engine 1 at a time point t4, the control device 5 increases an injection time for the main chamber 20 to increase the fuel gas supplied to the main chamber 20. At this point, in order to decrease the gas pressure in the auxiliary chamber 21 such that the fuel gas in the auxiliary chamber 21 is not enriched, the control device 5 sets the target gas pressure in the auxiliary chamber main pipe 39 lower and displaces the auxiliary chamber proportional valve 40 to the closed state. In order to decrease the gas pressure in the auxiliary chamber main pipe 39, a technique of causing the fuel gas in the auxiliary chamber main pipe 39 to flow into the auxiliary chamber 21 through the check valve 22 is conceivable. In this case, during a period until the gas pressure in the auxiliary chamber main pipe 39 decreases to the target gas pressure, the fuel gas flows into the auxiliary chamber 21 more than necessary, and therefore, an overrich state of the fuel gas is kept in the auxiliary chamber 21. Further, since a speed at which the gas pressure in the auxiliary chamber main pipe 39 decreases is limited by the flow velocity (gas flow rate) of the check valve 22, there is a probability that the opening degree of the auxiliary chamber proportional valve 40 is fixed to the lower limit and is brought into the fully-closed state before the gas pressure in the auxiliary chamber main pipe 39 sufficiently decreases. When the auxiliary chamber proportional valve 40 is fully closed, even if it is desired to increase the gas pressure in the auxiliary chamber main pipe 39 thereafter, a response delay occurs until the auxiliary chamber proportional valve 40 is opened from the fully-closed state. For this reason, it is difficult to cause the gas pressure in the auxiliary chamber main pipe 39 to quickly follow the target gas pressure. On the other hand, in the present embodiment, since the relief valve 42 is in the open state and the connection pipe 41 causes the auxiliary chamber main pipe 39 and the air supply passage 32 to communicate with each other, the gas in the auxiliary chamber main pipe 39 can be released to the air supply passage 32 through the connection pipe 41, and the gas pressure in the auxiliary chamber main pipe 39 can be quickly decreased. Thus, there is no period in which the fuel gas in the auxiliary chamber 21 is in the overrich state, and the opening degree of the auxiliary chamber proportional valve 40 is not fixed to the lower limit. Consequently, the gas pressure in the auxiliary chamber main pipe 39 can quickly follow the target gas pressure.

The relief valve controller 50 starts displacement of the relief valve 42 to the closed state at a time point t5 which is after a lapse of the predetermined first closing time since the load factor of the gas engine 1 reached the predetermined load threshold or more and after a lapse of the predetermined second closing time since the rotation number of the gas engine 1 reached a predetermined rotation number threshold or more.

Note that in the embodiment described above, as the operation state of the gas engine 1 when the relief valve controller 50 opens the relief valve 42, the state after a lapse of the predetermined time since the rotation number of the gas engine 1 reached the predetermined rated rotation number after the start of the gas engine 1 has been described as an example, but the present invention is not limited to this example. For example, in a case where the gas pressure in the auxiliary chamber main pipe 39 is high and the check valve 22 and the auxiliary chamber proportional valve 40 cannot be quickly displaced from the closed state to the open state, the relief valve controller 50 may perform control to open the relief valve 42.

Moreover, in the embodiment described above, the example where the connection pipe 41 is connected to the air supply passage 32 on the upstream side of the supercharger 34 in the air supply direction has been described, but the present invention is not limited to this example. For example, the connection pipe 41 may be connected to the air supply passage 32 at a position other than the upstream side of the supercharger 34, or may be connected to another position (e.g., the exhaust passage 46).

The relief valve controller 50 may perform control to open the relief valve 42 only at the time of a first stage of load application after the start of the gas engine 1, or may perform control to open the relief valve 42 according to the operation state of the gas engine 1 every time the load is applied.

As described above, according to the present invention, the gas engine 1 is the engine including, as the combustion chambers of each cylinder 11, the auxiliary chamber 21 that ignites the fuel gas to generate the flame and the main chamber 20 that combusts the mixture of fuel gas and air using the flame generated in the auxiliary chamber 21, and includes the auxiliary chamber main pipe 39 that supplies the fuel gas to the auxiliary chamber 21, the air supply passage 32 that circulates the air supplied to the main chamber 20, and the connection pipe 41 that communicates from the auxiliary chamber main pipe 39 to the air supply passage 32.

Thus, according to the gas engine 1 of the present invention, since the gas in the auxiliary chamber main pipe 39 can be released through the connection pipe 41, the gas pressure in the auxiliary chamber main pipe 39 can be decreased. Consequently, in the configuration in which the auxiliary chamber 21 is connected to the auxiliary chamber main pipe 39 through the check valve 22, the gas pressure in the auxiliary chamber 21 can be quickly decreased in such a manner that the gas pressure in the auxiliary chamber main pipe 39 is decreased by the connection pipe 41. For example, when the load is applied to the gas engine 1, it is necessary to decrease the gas pressure in the auxiliary chamber main pipe 39 such that the fuel gas in the auxiliary chamber 21 does not become excessively rich because the amount of fuel gas supplied to the main chamber 20 increases. Here, in a case where a technique of causing the fuel gas in the auxiliary chamber main pipe 39 to flow into the auxiliary chamber 21 through the check valve 22 is applied as a technique of decreasing the gas pressure in the auxiliary chamber main pipe 39, the followability of the gas pressure in the auxiliary chamber main pipe 39 to the target gas pressure is degraded as described above. On the other hand, in the gas engine 1 of the present invention, by decreasing the gas pressure in the auxiliary chamber main pipe 39 by the connection pipe 41 as described above, the gas pressure in the auxiliary chamber 21 can be decreased more quickly, and a favorable load responsiveness can be ensured.

The gas engine 1 of the present invention includes the supercharger 34 that compresses the air supplied to the main chamber 20, and the connection pipe 41 is connected to the air supply passage 32 on the upstream side of the supercharger 34 in the direction of supplying the air to the main chamber 20. Thus, in the gas engine 1 including the supercharger 34, the connection pipe 41 connected to the upstream side of the supercharger 34 in the air supply direction can promote the flow from the auxiliary chamber main pipe 39 to the air supply passage 32 using the negative pressure of the supply air generated by the supercharger 34, and the gas pressure in the auxiliary chamber main pipe 39 can be released more effectively.

In the gas engine 1 of the present invention, the connection pipe 41 includes the relief valve 42 capable of adjusting the flow rate of fuel gas from the auxiliary chamber main pipe 39 to the air supply passage 32. Thus, at the time of the start of the gas engine 1, by closing the connection pipe 41 by the relief valve 42, the gas pressure in the auxiliary chamber main pipe 39 is quickly increased to ensure the responsiveness to load application. Moreover, by opening the connection pipe 41 by the relief valve 42 before load application to the gas engine 1, the followability to the target gas pressure in the auxiliary chamber main pipe 39 can be ensured at the time of load application.

In the gas engine 1 of the present invention, In a case where the predetermined condition (the condition based on the operation state of the engine and the predetermined elapsed time) is satisfied, the relief valve 42 is switched to the open state, and accordingly, the auxiliary chamber main pipe 39 and the air supply passage 32 communicate with each other through the connection pipe 41. Thus, the gas engine 1 can suppress fluctuation in the gas pressure in the auxiliary chamber main pipe 39 due to opening/closing of the relief valve 42.

Note that in the embodiment described above, the case where the predetermined condition for switching the relief valve 42 to the open state is the condition based on the operation state of the engine and the predetermined elapsed time, specifically after a lapse of the predetermined time since the rotation number of the gas engine 1 reached the predetermined rated rotation number after the start of the gas engine 1, has been described as an example, but the present invention is not limited to this example. For example, the operation state of the engine is not limited to when the rotation number of the gas engine 1 reaches the predetermined rated rotation number after the start of the gas engine 1, and may be another timing. In another embodiment, the predetermined condition for switching the relief valve 42 to the open state may be set based on the difference between the gas pressure in the auxiliary chamber main pipe 39 and the gas pressure in the auxiliary chamber 21. For example, the gas pressure in the auxiliary chamber main pipe 39 may be higher than the gas pressure in the auxiliary chamber 21 by a predetermined threshold or more.

Note that the present invention can be changed as necessary without departing from the gist or idea of the invention that can be read from the claims and the entire specification, and these changes in the gas engine are also included in the technical idea of the present invention.

### LIST OF REFERENCE SIGNS

- 1: Gas Engine (Engine)
- 5: Control Device
- 11: Cylinder
- 16: Ignition Device
- 20: Main Chamber
- 21: Auxiliary Chamber
- 22: Check Valve
- 27: Ignition Plug
- 30: Intake Manifold
- 31: Fuel Gas Passage
- 32: Air Supply Passage
- 34: Supercharger
- 39: Auxiliary Chamber Main Pipe
- 40: Auxiliary Chamber Proportional Valve
- 41: Connection Pipe
- 42: Relief Valve
- 50: Relief Valve Controller

## Claims

1. An engine including, as a combustion chamber, an auxiliary chamber that ignites fuel gas to generate flame and a main chamber that combusts a mixture of fuel gas and air using the flame generated in the auxiliary chamber, comprising:
an auxiliary chamber main pipe that supplies the fuel gas to the auxiliary chamber,
an air supply passage in which the air to be supplied to the main chamber flows, and
a connection pipe communicating from the auxiliary chamber main pipe to the air supply passage.

2. The engine according to claim 1, further comprising a supercharger that compresses the air supplied to the main chamber, wherein
the connection pipe is connected to the air supply passage on an upstream side of the supercharger in a direction of supplying the air to the main chamber.

3. The engine according to claim 1 or 2, wherein the connection pipe includes a relief valve capable of adjusting a flow rate of the fuel gas from the auxiliary chamber main pipe to the air supply passage.

4. The engine according to claim 3, wherein the relief valve is switched to an open state when a predetermined condition is satisfied, and the connection pipe causes the auxiliary chamber main pipe and the air supply passage to communicate with each other.

5. The engine according to claim 4, wherein the predetermined condition is a case where a predetermined time has elapsed since a rotation number of the engine reached a predetermined rated rotation number or a case where a gas pressure in the auxiliary chamber main pipe is higher than a gas pressure in the auxiliary chamber by a predetermined threshold or more.
